(19) Europäisches Patentamt
European Patent Office
Office européen des brevets

(11) Publication number: 0 104 498
A2

# (12) EUROPEAN PATENT APPLICATION

(21) Application number: 83108642.6

(22) Date of filing: 01.09.83

(51) Int. Cl.³: C 08 F 292/00
C 09 D 3/00

(30) Priority: 02.09.82 US 414392
25.07.83 US 516859

(43) Date of publication of application: 04.04.84 Bulletin 84/14

(84) Designated Contracting States: AT BE CH DE FR GB IT LI LU NL SE

(71) Applicant: UNION CARBIDE CORPORATION
Old Ridgebury Road
Danbury Connecticut 06817(US)

(72) Inventor: Martin, Robert W.
P.O. Box 9352
South Charleston West Virginia 25303(US)

(74) Representative: Wuesthoff, Franz, Dr.-Ing. et al,
Patentanwälte Wuesthoff -v. Pechmann-Behrens-Goetz
Schweigerstrasse 2
D-8000 München 90(DE)

## (54) Polymer-encapsulated dispersed solids and methods.

(57) A process for preparing polymer-encapsulated dispersed non-monomer solids, such as, polymer-encapsulated pigments. Water, a pigment, a nonionic protective colloid or stabilizing agent, and a portion of a nonionic monomer having at least one monovalent unsaturated organo moiety are admixed. The pigment has a minimum of surface charge. A nonionic polymerization initiator is added to the admixture and the admixture is heated to begin the polymerization of the nonionic monomer. A nonionic catalyst and the remainder of the nonionic monomer are added to the admixture. The polymerization is allowed to proceed to finality or the desired degree. A polymer-encapsulated pigment dispersion is obtained.

EP 0 104 498 A2

## BACKGROUND OF THIS INVENTION

This invention relates to solids, such as, pigments encapsulated with a polymer, and methods of preparing and using such.

## BROAD DESCRIPTION OF THIS INVENTION

An object of this invention is to provide polymer-encapsulated dispersed non-monomer solids, such as, polymer-encapsulated pigments. Another object of this invention is to provide a process of preparing such polymer-encapsulated dispersed solids, such as, polymer-encapsulated pigments. A further object of this invention is to provide uses for such polymer-encapsulated dispersed solids (e.g., polymer-encapsulated pigments) and compositions containing such polymer-encapsulated dispersed solids (e.g., polymer-encapsulated pigments). Other objects and advantages of this invention are set out herein or are obvious herefrom to one ordinarily skilled in the art.

The objects and advantages of this invention are achieved by the polymer-encapsulated dispersed solids, such as, polymer-encapsulated pigments, methods and products of this invention.

This invention broadly involves a simple process for preparing uniformly polymer-encapsulated dispersed non-monomer solids. The process includes admixing water, a finely-divided solid, a nonionic protective colloid or stabilizing agent, and all or a portion of a nonionic monomer

having at least one monovalent unsaturated organo moiety in a reactor. The solid has a minimum of surface charge. A nonionic polymerization initiator is added to the admixture and the admixture is heated to begin the polymerization of the nonionic monomer. A nonionic catalyst and any remainder of the nonionic monomer is added to the admixture. The polymerization is allowed to proceed to finality or the desired degree. A high molecular weight polymer is preferred, but low molecular weight polymers can be used. A polymer-encapsulated solid dispersion is obtained. The novel system of this invention, however, must be primarily nonionic.

This invention involves a preferred, simple process for preparing uniformly polymer-encapsulated pigments. The process includes admixing water, finely-divided pigment, a nonionic protective colloid or stabilizing agent, and all or a portion of a nonionic monomer having at least one monovalent unsaturated organo moiety in a reactor. The pigment has a minimum of surface charge. A nonionic polymerization initiator is added to the admixture and the admixture is heated to begin the polymerization of the nonionic monomer. A nonionic catalyst and any remainder of the nonionic monomer is added to the admixture. The polymerization is allowed to proceed to finality or the desired degree. A high molecular weight polymer is preferred, but low molecular weight polymers can be used. A polymer-encapsulated pigment dispersion is obtained. The prior art shows precipitating polymers from a solvent-monomer system onto the pigment. The system must be primarily nonionic. The product might be termed "plastic pigments" or "opaque polymers".

The process of this invention for preparing the polymer-encapsulated solids (such as pigments) of this invention involves emulsion polymerization. The process is analogous to some latex processes. Advantageously the process is simple and versatile, can use conventional latex reactors, has short (reduced) reaction times, and involves good heat transfer. Reaction time to a given total solids is reduced by virtue of the pre-formed particle core (less monomer to react). (A pre-dispersion step may be required for hard-to-disperse pigments such as some $TiO_2$ and $CaCO_3$ unless these can be purchased in an acceptable slurry form.)

Through emulsion polymerization, pigments can be microencapsulated by utilizing the following processes:

1. Dispersing Monomer: This process embodiment utilizes a monomer that functions as a dispersant (or partial dispersant) for the pigment and yet copolymerizes readily with subsequent monomer feeds. Vinyl pyrrolidone is such a monomer, but it is limited to use with pigments having hydrophilic surfaces. For example, $CaCO_3$ and $TiO_2$ of the type TiPure R-931 cannot readily be encapsulated with vinyl pyrrolidone as the initiating monomer. Or, in other words, certain monomers such as N-vinyl pyrrolidone, vinyl acetate and butyl acrylate, serve both as the monomer forming the encapsulating polymer and as the dispersing monomer.

2. Surfactant Graft: This process embodiment necessitates the use of a nonionic surfactant with a long ethylene oxide chain. Igepal CO-990 (nonyl phenol/100 mols ethyleneoxide, EO) functions in this respect. In this technique, the hydrophilic portion of the soap (EO) is apparently attracted to the pigment surface and apparently either behaves as the polymerization locus or graft occurs

across the tert. hydrogen in the nonyl group. This system permits encapsulation of both hydrophilic and hydrophobic type pigments; however, the particle size of the pigment to be encapsulated is generally limited to the approximate size of the EO chains.

With either process embodiment, surface charge on the pigment must be minimal and inclusion of any substantial amount of anionic component (surfactant, catalyst, monomeric acid, etc.) in the initial stages of polymerization will substantially or totally inhibit encapsulation.

Polymer control techniques, such as, staged polymerization, for example, core/shell, can be used.

Some of the key elements of this invention emulsion polymerization process for the preparation of the invention polymer-encapsulated pigments are the use of (1) nonionic surfactants, (2) catalysts that leave a minimum of ionic residues in the polymer, and (3) the proper type of grade of pigment.

Any suitable vinyl monomer can be used to form the encapsulating vinyl polymer, but preferably vinyl acetate or alkyl acrylates are used. Encapsulation is shown by film appearance and performance (gloss, scrub, etc.), stability, behavior in the reactor (absence of flocculation) and incompatability with conventional paints, and through microphotographs.

This invention also includes the polymer-encapsulated dispersed non-monomer solids and the preferred polymer-encapsulated pigments.

The polymer-encapsulated solids or pigments of this invention are best described as a solids or pigment dispersion. A dispersion is an apparently homogeneous

substance which consists of a microscopically heterogeneous mixture of two or more finely-divided phases. The polymer-encapsulated pigments can be formulated into paints, producing unusually good appearance properties for the paint. The unique pigment dispersions of the invention are often more stable than the "pigment slurries" used in the paint industry today. The polymer-encapsulated pigments are useful in the preparation of paints or other coating materials, and represent stable paint/coating intermediates. The polymer-encapsulated pigment dispersion is film forming dependent on the typical emulsion polymer parameters of glass transition ($T_g$) and minimum filming temperatures (MFT). The films frequently show better appearance properties, such as, gloss, distinctness of image and hiding, than do conventional dispersions. In one sense, the polymer-encapsulated pigment dispersions can be viewed as pre-paints.

The polymer-encapsulated pigment dispersions of this invention, as compared to prior art coatings, can provide better economics, gloss, hiding power, open time, modulus, scrub resistance, color stability and durability. The encapsulated pigments function both as binder and pigment. This invention eliminates dispersion steps and equipment in preparing paints and coatings. The polymer-encapsulated pigment dispersions can be used in trade paints (e.g., gloss/semi-gloss, exterior house paints and interior flats), pigment slurries, paper coatings, roof coatings, caulks, adhesives, industrial coatings, and textiles.

In addition to paints, there are other related applications for coatings and adhesives containing such polymer-encapsulated pigments. The coatings, paints, adhesives, etc., are composed of the normal non-pigment

components of such coatings, paints, adhesives, etc., plus the polymer-encapsulated pigments of this invention. The polymer-encapsulated pigment dispersions themselves are pigment slurries that can be used wherever slurries are used. There is reasonable stability at polymer contents as low as 10 percent based on the pigment taken as 100 percent. At the 9/1 pigment/polymer ratio using clay or calcium carbonate, one has a model for a typical coating color for paper coating applications. Encapsulated-mica (for example) dispersions can be used in latex roof coatings to improve their resistance to water swelling and/or water permeability, and in latex caulks. Latex adhesives, e.g., clay-filled boxboard adhesives, can be achieved by utilizing a soft polymer encapsulation layer. Industrial coatings or baking enamels are other useful areas - an oven-dried sample of polymer-encapsulated pigment dispersion was prepared and examined, and the visual appearance of the gloss was strikingly excellent versus typical latex enamels. Textile binding or coating systems are useful areas by analogy to the paint, adhesive and paper coatings previously cited. There are many uses for the polymer-encapsulated dispersed non-monomer insoluble solids of this invention.

The best and preferred results have been obtained using polymer-encapsulated titanium dioxide in paints and polymer-encapsulated calcium carbonate in paper coatings. Normal coating grades of $TiO_2$ are difficult to control (adverse effects from organic and non-uniform inorganic treatments), so untreated, pure $TiO_2$ is preferred and cheaper. "Inert" pigments are preferably used, but at least some "reactive" pigments can be encapsulated. Basically, the titanium dioxide ($TiO_2$) is encapsulated with vinyl acetate

and/or acrylates with nonionic surfactants and/or poly(vinyl pyrrolidone) or vinyl pyrrolidone monomer as stabilizers and redox catalysts. In one scheme, first there is the dispersing of the pigment, monomer, water, stabilizing agents and followed by the adding of the catalysts. So the encapsulations include polymer plus possibly catalysts and stabilizing agent or nonionic surfactant.

The pigments basically should be pure pigments which have not been surface treated as the invention process may not succeed in encapsulating surface-treated pigments. Also, as absorbed oxygen on the surface of the pigment particles causes some inhibition of pigment encapsulation, such condition should be avoided.

Another preferred embodiment of the invention process involves the preparation of the encapsulation admixture before any nonionic polymerization initiator and nonionic catalyst have been added. First, a finely-divided solid and a nonionic protective colloid or stabilizing agent (plus water) are admixed. Then all or a portion of a nonionic monomer is added to such admixture. (Example 17 shows that a minor amount of initiator and reducer can be added to such admixture before the monomer is added.)

DETAILED DESCRIPTION OF THIS INVENTION

Homopolymers or copolymers can be used to encapsulate the pigments.

The monomers used herein have at least one monovalent unsaturated organic moiety. Mixtures of monomers can be used. A preferred class of monomers is that wherein the monovalent unsaturated organo moiety is an alkylene, aralkylene or cycloalkylene moiety. Preferably the monomer contains at least one reactive vinyl group $R_7R_8C{=}CR_9-$, reactive vinylidene group $R_7R_8C{=}C{=}C-$, and/or reactive vinylene group $-CR_{10}{=}CR_{11}-$. In such formulae, $R_7$, $R_8$, $R_9$, $R_{10}$ and $R_{11}$ each is (a) hydrogen, (b) alkyl having 1 to 4 carbon atoms, (c) alkoxy having 1 to 4 carbon atoms, (d) alkylcarboxy having 2 to 12 carbon atoms, (e) aryl having 6 to 10 carbon atoms, (f) alkoxycarbonyl having 2 to 12 carbon atoms, (g) substituted aryl having 6 carbon atoms and being substituted with at least one halogen, nitrile, alkyl having 1 to 4 carbon atoms, and/or alkoxy having 1 to 4 carbon atoms, (h) aralkyl wherein the alkyl has 1 to 4 carbon atoms and the aryl has 6 to 10 carbon atoms, (i) substituted aralkyl wherein the alkyl has 1 to 4 carbon atoms, the aryl has 6 to 10 carbon atoms and the substituents are halogen, alkyl having 1 to 4 carbon atoms, nitrile and/or alkoxy having 1 to 4 carbon atoms, (j) substituted alkyl having 1 to 4 carbon atoms and being substituted with nitrile, halogen and/or alkoxy having 1 to 4 carbon atoms, (k) substituted alkylcarboxy having 2 to 12 carbon atoms and substituted with halogen and/or nitrile, or (l) substituted alkoxycarbonyl having 2 to 12 carbon atoms and substituted with halogen and/or nitrile, with the proviso that no allyl compound or α-olefin, except ethylene, or substituted α-olefin, is within the scope of such formulae.

As used herein, the term "vinyl monomer" broadly means a monomer containing at least one of the groups vinyl, vinylidene or vinylene. Vinyl is $H_2C=CH-$; vinylidene is $H_2C=C=$; and vinylene is $-CH=CH-$. Each of such terms includes substituted groups.

Preferably the monovinyl monomer is a vinyl monomer having the formula:

$$H_2C=CH-R$$

wherein R is a hydrogen atom, a methyl group, an alkoxy group having from 1 to 4 carbon atoms, an alkylcarboxyl group having from 2 to 12, preferably from 2 to 10 carbon atoms, a nitrile group, a halogen atom, preferably a chlorine atom, a phenyl group or an alkoxycarbonyl group having from 2 to 12, preferably from 2 to 9 carbon atoms. A single vinyl monomer as well as mixtures of vinyl monomers, such as, vinyl chloride-vinyl acetate, vinylidene chloride-vinyl chloride and vinylidene chloride-acrylonitrile, can be used. The monovinyl monomers include: styrene; $\alpha$-substituted styrene, e.g., $C_6H_5\underset{\displaystyle |\atop R_2}{C}=CH_2$,

wherein $R_2$ is alkyl and/or alkoxy having 1 to 6 carbon atoms; substituted styrene, i.e., $R_nC_6H_{5-n}CH=CH_2$, wherein n is 1 to 5, R is chlorine, fluorine, bromine, iodine, alkyl having 1 to 6 carbon atoms, alkoxy having 1 to 6 carbon, $-CN$ or $-NO_2$; alkylacrylates wherein the alkyl has 1 to 11 carbons, preferably 1 to 6 carbons; alkoxyacrylates, wherein the alkyl has 1 to 11 carbons, preferably 1 to 6 carbons; alkyl methacrylates, wherein the alkyl has 1 to 10 carbons, preferably 1 to 6 carbons; and alkoxy methacrylates, wherein the alkyl has 1 to 10 carbons, preferably 1 to 6 carbons.

Examples of useful monovinyl monomers include: vinyl

halides, such as, vinyl chloride, vinyl fluoride and vinyl iodide; ethylene; vinyl esters of aliphatic monocarboxylic acids, such as, vinyl acetate, vinyl propionate, vinyl laurate, vinyl decanate, vinyl butyrate, vinyl isobutyrate, vinyl dimethylpropionate, vinyl ethylbutyrate, vinyl valerate, vinyl caproate, vinyl methoxyacetate, vinyl butoxyacetate, vinyl phenylacetate, vinyl acetoacetate, vinyl lactate, vinyl $\beta$-phenylbutyrate, vinyl cyclohexylcarboxylate, vinyl benzoate, vinyl salicylate and vinyl naphthoate; vinyl ethers, such as, n-butyl vinyl ether, isobutyl vinyl ether, vinyl propyl ether, vinyl 2-ethylhexyl ether, methyl vinyl ether, butyl vinyl ether, hexyl vinyl ether, octyl vinyl ether, decyl vinyl ether, ethylhexyl vinyl ether, methoxyethyl vinyl ether, ethoxyethyl vinyl ether, 1-methyl-2,2-dimethylpropyl vinyl ether, 2-ethylbutyl vinyl ether; vinyl alkoxyalkyl ethers; vinyl haloalkyl ethers; vinyl ketones, such as methyl vinyl ketone, phenyl vinyl ketone and methoxyethyl vinyl ketone; styrene; and styrene derivatives, such as $\alpha$-propylstyrene, $\alpha$-ethylstyrene, $\alpha$-methyl styrene, 2-chlorostyrene, 3-chlorostyrene, 4-chlorostyrene, 2-bromostyrene, 3-bromostyrene, 4-bromostryrene, 2-fluorostyrene, 3-fluorostyrene, 4-fluorostyrene, 4-nitrostyrene, 2-methoxystyrene, 3-methoxystyrene, 4-methoxystyrene, o-methylstyrene (o-vinyl toluene), m-methylstyrene, p-methylstyrene, 2,5-difluorostyrene, 2,5-dichlorostyrene, 2,4-dimethylstyrene, 2,5-dimethylstyrene, 2,4,6-trimethylstyrene, 4-methoxy-3-methylstyrene, 4-fluoro-3-trifluoromethylstyrene, 2-bromo-4-trifluoromethylstyrene, trifluorostyrene, dibromostyrene, iodostyrene, trimethylstyrene, ethylstyrene, diethylstyrene, isopropylstyrene,

butylstyrene, hexylstyrene, cyclohexylstyrene, decylstyrene, benzylstyrene, chloromethylstyrene, trifluoromethylstyrene and ethoxymethylstyrene.

Examples of further useful monovinyl monomers include: acrylic acid esters of monohydric alkanols, such as, methyl acrylate, ethyl acrylate, n-butyl acrylate, 2-ethylhexyl acrylate, isobutyl acrylate, n-propyl acrylate, isopropyl acrylate, n-butyl acrylate, sec-butyl acrylate, amyl acrylate, hexyl acrylate, octyl acrylate, tert-octyl acrylate, 2-phenoxyethyl acrylate, 2-chloroethyl acrylate, 2-bromoethyl acrylate, 4-chlorobutyl acrylate, cyanoethyl acrylate, 2-nitroethyl acrylate, benzyl acrylate, methoxybenzyl acrylate, 2-chloro cyclohexyl acrylate, cyclohexyl acrylate, 2-methoxyethyl acrylate, 3-methoxybutyl acrylate, 2-ethoxyethyl acrylate, 2-isopropoxyethyl acrylate, 2-butoxyethyl acrylate, 2-(2-methoxyethoxy)ethyl acrylate and 2-(2-butoxyethoxy)ethyl acrylate; methacrylic acid esters of monohydric alkanols, such as, methyl methacrylate, ethyl methacrylate, 2-ethylhexyl methacrylate, cyclohexyl methacrylate, phenyl methacrylate, methyl α-chloroacrylate, n-propyl methacrylate, isopropyl methacrylate, n-butyl methacrylate, isobutyl methacrylate, sec-butyl methacrylate, amyl methacrylate, hexyl methacrylate, cyclohexyl methacrylate, benzylmethacrylate, chlorobenzyl methacrylate, octyl methacrylate, N-ethyl-N-phenylaminoethyl methacrylate, 2-(3-phenylpropyloxy)ethyl methacrylate, 2-methoxyethyl methacrylate, 3-methoxybutyl methacrylate, 2-propoxyethyl methacrylate, 2-ethoxyethyl methacrylate, 2-isopropoxyethyl methacrylate, 2-butoxyethyl methacrylate, 2-(2-methoxyethoxy)ethyl methacrylate, 2-(2-ethoxyethoxy)ethyl methacrylate and 2-(2-butoxyethoxy)ethyl methacrylate;

unsaturated nitriles, such as acrylonitrile ($CH_2$=CHCN), and methacrylonitrile; and heterocyclic vinyl monomers, such as, N-vinyl pyrrolidone, N-vinyl carbazole, 2-vinyl-5-ethylpyridine, vinylpyridine (2, 3 or 4), vinylpicoline, N-vinyltriazole, N-vinyl-3,5-dimethylpyrazole, N-vinylcarbazole, vinylthiophene, N-vinylpyrrolidone, N-vinylpiperidone, N-vinyl-$\delta$-caprolactam and N-vinyl-2-pyridine.

Useful divinyl monomers include conjugated dienes and substituted divinyl acryl monomers (preferably p-divinyl-benzene). Examples of useful divinyl monomers include: o-, m- and p-divinylbenzene; divinyl ether or divinyl oxide [($CH_2$=CH)$_2$O]; 3,9-divinylspirobi-meta-dioxane; divinyl sulfone ($CH_2$=$CHSO_2CH$=$CH_2$); dienes or conjugated diolefins, such as, propadiene, 1,3-butadiene, 1,3-pentadiene (cis and trans), 1,5-hexadiene, 2-methyl-1,3-butadiene (isoprene), and 2,3-methylbutadiene; dicyclopentadiene; and 2-chlorol-3-butadiene.

Comonomers having three vinyl or allyl reactive moieties, such as triallyl cyanurate, diallyl fumarate and diallyl maleate, are also useful.

The vinyl reactive moieties of the monomers can be substituted, but the substituents (e.g., Cl) should not be directly on either of the double bond carbon atoms of the vinyl group (i.e., monovalent unsaturated organo group) unless the substituent is alkyl or alkoxy.

A pigment is a substance that imparts color, including black or white, to other materials. Pigments are generally considered to be insoluble in the medium (vehicle) in which they are applied. This invention does not include dyestuffs (dyes), which are soluble in the medium in which they are

applied. Pigments generally have the property of light refractivity, whereas dyes generally only have the property of light absorption. This invention includes inorganic pigments and organic pigments. Pigments are used as finely ground or particulated solid particles. As used herein and in the art, the term pigment includes phosphorescent, luminescent, fluorescent, metalescent and pearlescent materials.

The pigment must be in particle form and should have a mean particle size between 0.1 and 100 µm and preferably between 0.2 and 50 µm. The most preferred mean particle size for organic pigments is about 0.2 µm; the most preferred particle size for inorganic pigments is about 2 µm. Particle size, size distribution and shape will be dictated by the pigment(s) of choice. This invention helps eliminate pigment aggregates or agglomerates. The color of the pigments are fully developed, and high pigment loadings can be obtained.

Examples of pigments, by color, are: opaque white pigments, such as, zinc white (ZnO), antimony oxide ($Sb_2O_3$), zirconium oxide (ZrO), titanium dioxide ($TiO_2$), lithopone (about 66 percent $BaSO_4$ and about 34 percent ZnS), titanium calcium white (25 percent $TiO_2$ and 75 percent $CaSO_4$), and titanium barium white (25 percent $TiO_2$ and 75 percent $BaSO_4$); red and orange pigments, such as, red lead ($Pb_3O_4$), cadmium red [CdS(Se)], antimony vermillion ($Sb_2S_3$), vermillion (HgS), chrome orange [$PbCrO_4 \cdot Pb(OH)_2$], molybdate orange, [Pb(MoS, Cr, P)$O_4$], cadmium red lithopone [CdS(Se) and $BaSO_4$], and quinacridone red ($C_{20}H_{12}O_2N_2$); yellow pigments, such as, zinc yellow ($4ZnO \cdot 4CrO_3 \cdot K_2O \cdot 3H_2O$), barium yellow ($BaCrO_4$), cobalt yellow [$CoK_3(NO_2)_6 \cdot H_2O$], strontium yellow ($SrCrO_4$], Naples

yellow [[$Pb_3(SbO_4)_2$], chrome yellow ($PbCrO_4$), cadmium yellow (CdS), massicot (PbO), cadmium yellow lithophone (CdS and $BaSO_4$), and indian yellow ($C_{19}H_{18}O_{11}Mg$ $5H_2O$); green pigments, such as, cobalt green (CoO·nZnO), viridian ($Cr_2O_3$· $2H_2O$), phthalocyanine green, emerald green [$Cu(C_2H_3O_2)_2$ $3Cu(AsO_2)_2$], chromium oxide green ($Cr_2O_3$), chrome green ($Fe_4[Fe(CN)_6]_3$ and PbCrO), and verdigris [$Cu(C_2H_3O_2)_2$· $2Cu(OH)_2$], malachite [$CuCO_3$·$Cu(OH)_2$] violet pigments, such as, cobalt violet [$Co_3(PO_4)_2$], ultramarine violet, manganese violet [$(NH_4)_2Mn_2(P_2O_7)_2$], and quinacridone violet ($C_{20}H_{12}O_2N_2$); blue pigments, such as, Prussian blue ($Fe_4[Fe(CN)_6]_3$), Egyptian blue (CaO·CuO·$4SiO_2$), manganese blue ($BaMnO_4$ and $BaSO_4$), cobalt blue (CuO·$Al_2O_3$), azurite [$2CuCO_3$ $Cu(OH)_3$], cerulean blue (CoO·$nSnO_2$), blue verditer [$2CuCO_3$·$Cu(OH)_2$], phthalocyanine blue, and ultramine blue ($Na_{8-10}Al_6Si_6S_{2-4}$); black pigments, such as, lamp black (C), bone black [C and $Ca_3(PO_4)_2$], charcoal black (C), and graphite (C); and brown pigments, such as, sepia.

A more generalized list of organic and inorganic pigments which can be used in this invention includes iron oxide red, zinc oxide, titanium dioxide, chrome yellow, carbon black, chrome orange, chrome green, zinc chromate, red lead, the lakes, azo type toners, phthalocyanines, aluminum hydrates, lakes, iron oxide, white lead, titanium-containing pigments, calcium carbonate, aluminum oxide, ultraphone, lead chromate, cadmium sulfide, cadmium selenide, barium sulfate, azo pigments, anthraquinone and vat pigments, acrylamino yellow, magnesium oxide, chrome red, antimony oxide, zinc sulfide, magnesium fluoride and ground barytes. Benzoid pigments are useful and examples thereof are toners and lakes. Examples of benzoic toners are: yellow toners, e.g.,

benoid yellows and Hansa yellow; orange toners, e.g., vat orange 3; red toners, e.g., napthol reds; violet toners; blue toners; green toners; brown toners; and black toners. Examples of benzoic lakes are: yellow lakes, e.g., acid yellow 2; orange lakes; red lakes; violet lakes; blue lakes, e.g., acid blue 93; green lakes; brown lakes; and black lakes; e.g., natural black 3. Metallic pigments can be used, and an example thereof is aluminum flakes. Mixtures of pigments can be used. Note that "reactive" pigments such as ZnO can be used.

An extender is a substance, usually an inert material, which is added to paint to give it extra body, key or opacity, or to serve as an adulterating medium.

The invention includes the polymer-encapsulation of extenders. Examples of suitable extenders (also termed inert white pigments or transparent white pigments) or fillers are talc ($3MgO\ 4SiO_2\ H_2O$), chalk ($CaCO_3$), barytes ($BaSO_4$), barium carbonate ($BaCO_3$), aluminum hydrate [$Al(OH)_3$], mica, diatomaceous earth ($SiO_2$), aluminum stearate [$Al(C_{18}H_{35}O_2)_3$], gypsum ($CaSO_4 \cdot 2H_2O$), anhydrite ($CaSO_4$), silica quarts ($SiO_2$), kaolinite ($Al_2O_3 \cdot 2SiO_2 \cdot 2H_2O$) and other clay and silica fillers.

Mixtures of pigments and/or extenders can be used.

For specific pigments the advantages are:

(a) $TiO_2$ - Increased hiding power with reduced pigment level. This must occur because drying forces induce reagglomeration, loss of surface area and loss of hide. A pigment particle surrounded by a plastic barrier cannot reagglomerate.

(b) Calcined Clays - This family can be

encapsulated without filling the pigment void with encapsulating polymer, so both dry and wet hide can be achieved at a fraction of the cost of prime pigments without the negatives encountered in current microvoid technology (no wet hide, dirt/stain pick-up, gloss restrictions, etc.).

(c) Color pigments - Probably the paint chemists' number one headache. Encapsulated color pigments should eliminate problems of color development, color acceptance (rub-up), floating, flooding, etc.

The non-monomer solids are those which are insoluble in the medium (vehicle) in which they are applied. The non-monomer solids can be organic or inorganic.

Water that is contained in the initial charge can readily be varied over the range of 4/6 to 7/3 water/total solids ratio, wherein such total solids are equal to the monomer and the non-monomer solids (pigment) content. The water is not a solvent in the invention as the pigment, monomer, etc., are insoluble therein. The water serves as a heat control mechanism and forms the liquid phase of an emulsion. Minor amounts (up to say 10 percent) of non-aqueous liquids can be used in conjunction with the water. Examples of such non-aqueous liquids are alcohols, such as, methanol, ethanol, n-propyl alcohol, n-butyl alcohol, amy alcohol, isopropyl alcohol, sec-butyl alcohol, isobutyl alcohol and 4-methyl 2-pentanol; ethers, such as, ethyl ether, diethyl Cellosolve and butyl ether; and aldehydes, such as, benzaldehyde and furfural.

The most preferred stabilizing agent or protective colloid is T-Det N-1007 (Thompson-Hayward), a 100-mole ethoxylate of nonyl phenol. CELLOSIZE, poly(vinyl pyrrolidone), and poly(vinyl alcohol) typically can be used either alone or in combination with the T-Det N-1007. Preferred stabilizing agent concentrations are 0.5 to 4.5 parts based on the solids (monomer plus pigment). With high surface area pigments, up to 10 parts based on the total solids may be required. In some cases, monomer alone is sufficiently surface active to effect dispersion of the pigment (or non-monomer solids) and the encapsulated polymer can still maintain a stable dispersion. Examples have included vinyl acetate or N-vinyl pyrrolidone (V-Pyrol of GAF). The presence of anionic surfactants as a wetting or stabilizing agent is very detrimental to the stability of the dispersion. Generally, a system which effectively forms an excellent initial dispersion of the pigment is favored; but several cases have been seen where dispersion seems to improve during the initial stages of polymer formation. Oligomeric forms of the polymer or its grafts are suspected of contributing to the degree of dispersion and its stabilization analogously to similar processes frequently postulated for conventional latex polymerizations. Pigment (or non-monomer solids)-to-monomer ratios at 9/1 to 1/9 are preferred.

Carboxylated polymer layers can be formed if comonomers, such as, acrylic acid or methacrylic acid, are added at the final stages of the process. In this case, the anionic character of such carboxylic monomers appears to be weakened by the preformation of the polymer layer. Also, anionic surfactants can be added at the completion of the

encapsulation without causing destabilization of the dispersion. Polymerization temperatures over the range of 40° to 85°C are preferred. A variety of latex type processes can be employed. Preferably monomer (5 to 10 percent of the total monomer) is initially added, followed by a monomer feed. Other processes which can be used in this invention include (1) adiabatic systems in which all of the monomer is charged, followed by the catalyst, (2) staged fed systems or staged adiabatic systems, and (3) core/shell type systems where different monomers are sequentially fed or adiabatically reacted or in which staged polymerization processes are employed. The preferred monomers include vinyl acetate, the butyl, ethyl, 2-ethylhexyl and isobutyl acrylate esters, styrene, acrylonitrile, methyl methacrylate, and vinyl pyrrolidone. The normal relationships seen in emulsion polymerization appear to prevail, e.g., styrene/vinyl acetate copolymers will not form readily. Even vinyl isobutyl ether is useful in a copolymer. The principles applicable to conventional emulsion polymerization can be applied as long as care is taken to keep the system as nonionic as is reasonable in the initial steps.

A pigment should have good dispersing properties and should be uniformly distributed throughout the surface regions or the entire mass to be pigmented, as desired. Since the pigment (or solids) is highly dispersed in a polymerencapsulated pigment (or solids) dispersion such behavior eliminates or minimizes the separate task of dispersion of the pigment (or solids).

This invention includes the use of at least one nonionic surfactant or wetting agent. Nonionic surfactants have essentially no charge when dissolved or dispersed in aqueous

media. The hydrophilic tendency of nonionic surfactants is primarily due to oxygen in the molecule which hydrates by hydrogen bonding to water molecules. The strongest hydrophilic moieties in nonionic surfactants are ether linkages and hydroxyl groups, but the hydrophilic ester and amide linkages are present in many nonionic surfactants.

The commercially available nonionic surfactants include ethoxylated alkylphenols, ethoxylated aliphatic alcohols, carboxylic esters, caraboxylic amides, and polyoxyalkylene oxide block copolymers - such are useful within the scope of this invention.

Nonionic ethoxylated allkylphenols usually are $C_8$ to $C_{12}$ members or derivatives thereof, such as, nonylphenoxypoly (ethyleneoxy)ethanols, dodecylphenoxypoly(ethylene-oxy)ethanols, and octylphenoxypoly(ethyleneoxy)ethanols. Examples of useful nonionic ethoxylated alkylphenols or more specifically alkylphenoxypoly(ethyleneoxy)ethanols, (with the alkyl groups designated in some instances) are Adsee 50, Advawet, Agrimul 70A, Atkaflo-E, Brites EOC-10 (nonyl), Carboxane DO, Carboxane NW, Conco NI-21 (nonyl), Depcopal, Dergon, Dispersant NI-O, Dispersant NI-W, Estronon NI Conc, Examide-G, Hipochem AR-100, Hyonic PE-100, Iberscour W Conc, Iberwet W-100, Igepal CA-630 (octyl), Igepal CA-730 (octyl), Igepal CO-210 (nonyl), Igepal CO-430 (nonyl), Igepal CO-530 (nonyl), Igepal CO-630 (nonyl), Igepal CO-710 (nonyl), Igepal CO-730 (nonyl), Igepal CO-850 (nonyl), Igepal CO-880 (nonyl), Igepal DM-530 (dialkyl), Igepal DM-730 (dialkyl), Igepal LO-430 (linear alkyl), Igepal LO-520 (linear alkyl), Igepal LO-630 (linear alkyl), Igepal LO-730 (linear alkyl), Polytergent B-350 (nonyl), Polytergent G-300 (octyl), Polytergent G-400 (octyl), Renex 648 (nonyl), Renex 650

(nonyl), Renex 678 (nonyl), Renex 690 (nonyl), Retzanol NP-40, Retzanol NP-80, Retzanol NP-120, Retzanol NP-200, Retzanol NP-500, Solar 4 Liquid Conc. (nonyl), Solar 12 (nonyl), Solar 53 (nonyl), Solar NP 100 (octyl), Solar NP Liquid Conc. (nonyl), Solar NPO (nonyl), Sponto 200, Standopon, Surfonic N-40 (nonyl), Surfonic N-60 (nonyl), Surfonic N-95 (nonyl), Surfonic N-120 (nonyl), Surfonic N-200 (nonyl), Surfonic N-30 (nonyl), Synthonon 100 (nonyl), T-DET N-4 (nonyl), T-DET N-6 (nonyl), T-DET N-9.5 (nonyl), T-DET N-12.5 (nonyl), T-DET N-15 (nonyl), T-DET N-20 (nonyl), Intexon NP-3 (nonyl), Levelene (nonyl), Lipal 9N (nonyl), Makon 4, Makon 10, Makon 20, Makon 30, Neopon NP-10, Neutronyx 600 (nonyl), Neutronyx 605 (isooctyl), Neutronyx 622 (nonyl), Neutronyx (nonyl), Neutronyx 676 (nonyl), Ninox BDO, Ninox BFO, Nonionic E-4 (linear alkyl), Nonionic E-10 (linear alkyl), Nonionic E-15 (linear alkyl), Nutrosan TS Conc. (nonyl), Polytergent B-300 (nonyl), Tergitol L2-P-6 (dodecyl), Tergitol 12-P-9 (dodecyl), Tergitol 12-P-12 (dodecyl), Tergitol NP-14 (nonyl), Tergitol NP-27 (nonyl), Tergitol NP-33 (nonyl), Tertitol NP-35 (nonyl) Tergitol NP-44 (nonyl), Triton N-57 (nonyl), Triton N-101 (nonyl) Triton N-111 (nonyl), Triton X-35 (octyl), Triton X-45 (octyl), Triton X-100 (t-octyl), Triton X-102 (t-octyl), Triton X-114 (t-octyl), Triton X-165 (octyl), Triton X-205 (octyl), Triton X-305 (octyl), and Valdet (nonyl).

Examples of useful nonionic ethoxylated aliphatic alcohols, or more specifically alkylpoly(ethyleneoxy)ethanols, (with the alcohol designated in some instances) are Alfonic 1218-60 (primary, linear), Alfonic 1012-60 (primary, linear), Alfonic 1014-60 (primary, linear), Alfonic 1480-60 (primary, linear), Allo Scour RB, Antarox

BL-330, Antarox LF-330, Arosurf JL-457 (oleyl), Arosurf JL-758 (oleyl), Azocrest, Bio Soft EA-10, Brij 30 (lauryl), Brij 35 (lauryl), Brij 52 (cetyl), Brij 56 (cetyl), Brij 58 (cetyl), Brij 72 (stearyl), Brij 76 (stearyl), Brij 78 (stearyl), Brij 92 (oleyl), Brij 96 (oleyl), Brij 98 (oleyl), Carboxane TW-85, Cerfak, Crestomul L, Depconol 111, Dergopen RN, Drupene VO-250, Emnon6954, Emulphogene BC-420(tridecyl), Emulphogene BC-610 (tridecyl), Emulphogene BC-840 (tridecyl), Emulphor ON-870 (oleyl), Lipal 30 SA (stearyl), Lipal 3 TD (tridecyl), Lipal 6 TD (tridecyl), Lipal 10 TD (tridecyl), Neodol 23-3 ($C_{12-13}$ prim.-lin.), Neodol 23-6.5 ($C_{12-13}$ prim.-lin.), Neodol 25-3 ($C_{12-15}$ prim.-lin.), Neodol 25-7 ($C_{12-15}$ prim.-lin.), Neodol 25-9 ($C_{12-15}$ prim.-lin.), Neodol 25-12 ($C_{12-15}$ prim.-lin.), Nutrosan U-9, Plurafac A-38, Poly Tergent J-200 (tridecyl), Poly Tergent J-500 (tridecyl), Promulgen 1703, Renex 30 (tridecyl), Retzanol SN, Siponic L-4 (lauryl), Siponic L-12 (lauryl), Siponic L-16 (lauryl), Siponic L-25 (lauryl), Ethosperse LA-4 (lauryl), Ethosperse LA-12 (lauryl), Ethosperse LA-23 (lauryl), Ethosperse OA-9 (oleyl), Ethosperse TDA-6 (tridecyl), Ethosperse TDA-12 (trideddcyl), Examide-DA, Foryl 100, Hyonic KO-620, Igepal A (lineara alcohol) Kyro EOB, Lipal 610 (tridecyl), Lipal 2 CA (cetyl), Lipal 9 LA (lauryl), Lipal 4 LA (lauryl), Lipal 12 LA (lauryl), Lipal 23 LA (lauryl), Lipal 4 MA (myristyl), Lipal 8 MA (myristyl), Lipal 2 OA (oleyl), Lipal 5 OA (oleyl), Lipal 10 OA (oleyl), Lipal 20 OA (oleyl), Lipal 50 OA (oleyl), Lipal 20 SA (stearyl), Standamul 18, Standapon 209, Surfonic JN-70 (n-alkyl), Surfonic NY-30 (primary-linear), Surfonic NY-66 (primary-linear), Surfonic NY-150 (primary-linear), Surfonic NY-300 (primary-linear), Telkanite

M, Tergitol 3-A-6 (tridecyl), Tergitol 15-S-5 (secondary, $C_{11-15}$), Tergitol 15-S-9 (secondary $C_{11-15}$), Tergitol 15-S-12 (secondary, $C_{11-15}$), Tergitol 15-S-15 (secondary, $C_{11-15}$), Tergitol 45-S-9, Tergitol 44-S-10, Tergitol TWN (trimethylnonyl), Triton X-67, Volpo 3 (oleyl), Volpo 10 (oleyl), Volpo 20 (oleyl), Trycol LAL-4 (lauryl), Trycol LAL-8 (lauryl), Trycol LAL-12 (lauryl), Trycol LAL-23 (lauryl), Trycol TDA-6 (tridecyl), Trycol TDA-9 (tridecyl), Trycol TDA-15 (tridecyl), Tricol TDA-18 (tridecyl), Tricol OAL-23 (oleyl), Sterox AJ-100 (tridecyl), and Steros AP-100 (tridecyl).

The nonionic carboxylic acid ester type of surfactants are polyolsolubilized, polyoxyethylene-solubilized, or both, and are based on several different types of hydrophobes. The nonionic carboxylic acid esters include glycerol esters, polyethylene glycol ester, anhydrosorbitol esters, ethoxylated anhydrosorbitol esters, ethylene and diethylene glycol esters, propanediol esters, and ethoxylated natural fats and oils. Examples of useful nonionic glycerol esters of fatty acids are Aldo MC (monococoate), Aldo ML (monolaurate), Aldo MR (monoricinoleate), Aldo MS, Nat. For. (monostearate), Arlacel 165 (monostearate), Atmos 150 (mono and di fatty acid), Atmul 80 (mono and di fatty acid), Atmul 124 (mono and di fatty acid), Atmul 500 (mono and di fatty acid), Cerasynt O (monostearate), Drewmulse CNO #70 (monococoate), Drewmulse GMO (monooleate), Drewmulse HM-100 (monostearate), Emcol MSC (monostearate), Emerest 2400 (monostearate), Emerest 2421 (monooleate), Flexricin 13 (monoricinoleate), Hallco CPH-34-N (monolaurate), Hallco CPH-35-N (monoricinoleate), Hodag GML (monolaurate), Hodag GMO (monooleate), Hodag GMR (monoricinoleate), Hodag GMS

(monostearate), Kessco Ester (doleate), Kessco Ester (monooleate), Kessco Ester (monostearate), Monoflake (monostearate), Myverol Type 18-45 (cottonseed, mono), Myverol Type 18-98 (safflower oil, mono), Surfactol 13 (monoricinoleate),and Uniwax-GMS (monostearate).

The polyethylene glycol series of nonionic surfactants are the polyoxyethylene esters of fatty acids and of alicyclic carboxylic acids related to abietic acid. Examples of useful nonionic polyethylene glycol esters fatty acids, rosin and tall oil (with the degree of esterification and the acid designated) are Aldosperse ML-14 (mono, lauric), Aldosperse O-9 (mono, oleic), Aldosperse S-9 (mono, stearic), Aldosperse S-40 (mono, stearic), Arosurf HFL-418 (mono, lauric), Arosurf HFL-714 (mono, lauric), Arosurf HFS-546 (mono, stearic), Arosurf HFS-846 (mono, stearic), Arosurf HFT-453 (mono, tall oil), Carboxane 863 (mono, fatty), Emcol H-31A (mono, oleic), Emerest 2620 (mono, lauric), Emerest 2622 (di, lauric), Emerest 2640 (mono, stearic), Emerest 2642 (di, stearic), Emerest 2646 (mono, oleic), Emerest 2650 (mono, lauric), Emerest 2652 (di, lauric), Emerest 2660 (mono, oleic), Emulphor VN-430 (mono, fatty), Emulsynt 600 (di, oleic), Estex P4-0 (mono, oleic), Estex P4-S (mono, stearic), Estex SE 750 (mono, lauric), Kessco Ester (mono, lauric), Kessco Ester (di, oleic), Kessco Ester (mono, oleic), Kessco Ester (di, stearic), Kessco (mono, stearic), Kessco Ester (mono, lauric), Lipal 300 DL (di, lauric), Lipal 400 DS (di, stearic), Lipal 300S (mono, stearic), Morosol 120 (mono, stearic), Morosol 3F (mono, oleic), Morosol 3F (mono, oleic), Morosol 4L (mono, lauric), Myrj 45 (mono, stearic), Myrij 52 (mono, stearic), Neutronyx 268 (di, stearic), Neutronyx 330 (mono, soybean), Neutronyx

332 (mono, stearic), Neutronyx 834 (mono, oleic), Nonisol 100 (mono, lauric), Nonisol 200 (mono, oleic), Nonisol 300 (mono, stearic), Nopalcol 6-L (mono, lauric), Nopalcol 6-O (mono, oleic), Ethofat C/15 (mono, coconut), Ethofat C/25 (mono, coconut), Ethofat 142/20 (mono, tall oil), Ethofat 242/25 (mono, tall oil), Ethofat 0/15 (mono, oleic), Ethofat 0/20 (mono, oleic), Ethofat 60/15 (mono, stearic), Ethofat 60/20 (mono, stearic), Ethofat 60/25 (mono, stearic), Hodag 20-L (mono, lauric), Hodag 40-L (mono, lauric), Hodag 40-O (mono, oleic), Hodag 40-S (mono, stearic), Hodag 40-R (mono, ricinoleic), Hodag 42-L (di, lauric), Hodag 42-S (di, stearic), Hodag 60-L (mono, lauric), Hodag 60-S (mono, stearic), Hodag 62-O (di, oleic), Hodag 62-S (di, stearic), Hooag 150-S (mono, stearic), Hodag 150-O (di, oleic), Keripon NC (mono, fatty), Kessco Ester (mono, lauric), Kessco Ester (di, lauric), Pegosperse 400-DL (di, lauric), Pegosperse 400-DO (di, oleic), Pegosperse 400-DS (di, stearic), Pegosperse 400-MOT (mono, tallic), Pegosperse 200-ML (mono, lauric), Pegosperse 100-MR (mono, ricinoleic), Pegosperse 100-MS (mono, stearic), Pegosperse 100-O (mono, oleic), Renex 20 (mono, fatty and rosin), RJT Base (mono, fatty), Soltex 3835 (mono, fatty), Stearox CD (mono, tall oil), Surfactant AR150 (mono, rosin), Teox (mono, tall oil) Trydet SA-8 (mono, stearic), Trydet 20 (mono, tall oil), Varconic Q 510 (mono, oleic), and ViscoL-1117 (mono, stearic). Commercial polyoxyethylene fatty acid esters are mixtures that contain various proportions of the following components: monoesters, $RCOO(OCH_2CH_2)_nOH$; diesters, $RCOO(OCH_2CH_2)_nOOCR$; and polyglycol, $H(OCH_2CH_2)_nOH$.

Sorbitan is a mixture of anhydrosorbitols. Examples of useful nonionic fatty acid esters of sorbitan (with the

ester designated) are Armotan ML (monolaurte), Armotan MO (monooleate), Armotan MS (monostearate), Drewmulse SML (monolaurate), Drewmulse SMO (monooleate), Drewmulse SMP (monopalmitate), Drewmulse SMS (monostearate), Emsorb 2500 (monooleate), Emsorb 2505 (monostearate), Emsorb 2510 (monopalmitate), Emsorb 2503 (trioleate), Emsorb 2507 (tristearate), Estasorb L (monolaurate), Estasorb P (monopalmitate), Estasorb S (monostearate), Estasorb O (monooleate), Estasorb TS (tristearate), Estasorb TO (trioleate), Glycomul L (monolaurate), Glycomul O (monooleate), Glycomul P (monopalmitate), Glycomul S (monostearate), Hodag SML (monolaurate), Hodag SMP (monopalmitate), Hodag SMS (monostearate), Hodag STS (tristearate), Hodag SMO (monooleate), Hodag STO (trioleate), Span 20 (monolaurate), Span 40 (monopalmitate), Span 60 (monostearate), Span 65 (tristearate), Span 8 (monooleate), and Span 85 (trioleate).

Examples of useful exoxylated anhydrosorbitol esters, or more specifically polyoxyethylene derivatives of sorbitan fatty acid esters (with the ester designated) are Armotan PML-20 (monolaurate), Armotan PMO-20 (monooleate), Armotan PMS-20 (monostearate), Drewmulse POE-SMO (monooleate), Drewmulse POE-SML (monolaurate), Drewmulse POE-SMP (monopalmitate), Drewmulse POE-SMS (monostearate), Drewmulse POE-STS (tristearate), Emprite 6120 (monooleate), Emrite 6125 (monostearate), Emrite 6127 (tristearate), Glycosperse L-20 (monolaurate), Glycosperse O-20 (monooleate), Glycosperse O-5 (monooleate), Glycosperse P-20 (monopalmitate), Glycosperse S-4 (monostearate), Glycosperse S-20 (monostearate), Glycosperse TO-20 (trioleate), Glycosperse TS-20 (tristearate), Hodag PSML-20 (monolaurate), Hodag PSMO-20

(monooleate), Hodag PSMP-20 (monopalmitate), Hodag PSMS-20 (monostearate), Hodag PSTS-20 (tristearate), Hodag PSTO-20 (trioleate), Sorbinox L-20 (monolaurate), Sorbinox O-5 (monooleate), Sorbinox O-20 (monooleate), Sorbinox P-20 (monopalmitate), Sorbinox S-20 (monostearate), Sorbinox TO-20 (trioleate), Sorbinox TS-20 (tristearate), Tween 21 (monolaurate), Tween 20 (monolaurate), Tween 40 (monopalmitate), Tween 61 (monostearate), Tween 60 (monostearate), Tween 65 (tristearate), Tween 81 (monooleate), Tween 80 (monooleate), and Tween 85 (trioleate).

Examples of useful glycol esters of fatty acids (with the ester designated) are Cerasynt M (EG stearate), Drewmulse EGMS (EG monostearate), Drewmulse EGDS (EG distearate), Emerest 2350 (EG monostearate), Hallco 37-N (EG monostearate), Hodag EGS (EG monostearate), Kessco Ester (EG distearate), Kessco Ester (EG monostearate), Cerasynt W (DEG monostearate), Emcol CAD (DEG stearate), Emcol DOS (DEG oleate), Emcol RDCD (DEG cocoate), Emerest 2360 (DEG monostearate), Hodag DGL (DEG monolaurate), Hodag DGO (DEG monooleate), Hodag DGS (DEG monostearate), Kessco Ester (DEG monostearate), Cerasynt PA (PG monostearate), Drewlene 10 (PG monostearate), Drewmulse PGML (G monolaurate), Drewmulse PGMS (PG monostearate), Emerest 2381 (PG monostearate), Emerest 2386 (PG distearate), Hallco CPH-32 (PG monostearate), Hodag PGML (PG monolaurate), Hodag PGMS (PG monostearate), and Pegosperse PS (PG stearate). Above, EG is ethylene glycol, DEG is diethylene glycol and PG is propylene glycol. Examples of useful ethoxylated natural fats, oils and waxes that are nonionic surfactants are the ethoxylated castor oils.

Nonionic surfactants include carboxylic amides, such as, diethanolamine condensates, monoethanolamine condensates and isopropanolamine condensates. Examples of useful nonionic diethanolamides of fatty acids are the diethanolamides of coco, lauric, oleic, myristic, stearic and ricinoleic acids. Examples of useful nonionic monoalkanolamides of fatty acids are those of lauric, coco, oleic and stearic acids, with the amine moiety being that of ethanol or isopropanol. Nonionic surfactants also include nonionic polyoxyethylene fatty acid amides, for example, of coco, lauric and oleic acids.

Nonionic surfactants include polyalkylene oxide block copolymers such as Tergitol XH and XD (polyoxypropylene-polyxyethylene) of Union Carbide Corporation, and polysiloxane-polyoxyalkylene copolymers such as L-520 of Union Carbide Corporation.

The initiator or catalyst systems appear to be critical to a successful polymer-encapsulated pigment (or non-monomer solid). The most preferred system is t-butyl hydroperoxide with sodium formaldehyde sulfoxylate (a Redox system). Hydrogen peroxide/sodium formaldehyde sulfoxylate and hydrogen peroxide/ferrous ion systems are preferred. All attempts so far to use thermal potassium or ammonium persulfate or a redox system of potassium persulfate/sodium formaldehyde sulfoxylate system have resulted in destabilization. Apparently the anionic character of such systems somehow interferes with the encapsulation as do anionic surfactants.

The initiator can be a free radical initiator. The preferred free radical initiators are the peroxides. Examples of useful peroxides are: the dialkyl peroxides, such

as, di-t-butyl peroxide, lauroyl peroxide, decanoyl peroxide, 2-methylpentanoyl peroxide, acetyl peroxide, 2,5-dimethyl-2,5-di(t-butylperoxy)hexane and 2,5-dimethyl-2,5-di(t-butylperoxy)hexyne-3; the diaryl peroxides, such as, benzoyl peroxide; the alkaryl peroxides, such as, dicumyl peroxide; the sulfonyl peroxides, such as, acetyl cyclohexylsulfonyl peroxide and acetyl sec-heptylsulfonyl peroxide; the peresters, such as, t-butyl perbenzoate, t-butyl peroxyneodecanoate, t-butyl peroxypivalate, 1,1,3,3-tetramethylbutyl peroxy-2-ethylhexanoate, 2,5-dimethyl-2,5-bis-(2-ethylhexanoylperoxy)hexane, t-butyl peroxy-2-ethyl-hexanoate, t-butyl peroxyisobutyrate, t-butyl peroxymaleic acid, OO-t-butyl O-isopropyl monoperoxycarbonate, 2,5-dimethyl-2,5-bis-(benzoylperoxy)hexane, t-butyl peracetate and di-t-butyl diperoxyphthalate; the peroxydicarbonates, such as, di(isopropyl) peroxydicarbonate, diisopropyl peroxydicarbonate, di(secbutyl) peroxydicarbonate, di(2-ethylhexyl) peroxydicarbonate, dicyclohexyl peroxydicarbonate and dibenzyl peroxydicarbonate; the organometallic peroxides, such as, vinyl tris(t-butyl peroxy)silane; the hydroperoxides, such as, t-butyl hydroperoxide and cumyl hydroperoxide, 1,1,3,3-tetramethylbutyl hydroperoxide and 2,5-dihydroperoxy-2,5-dimethylhexane; and the azo compounds, such as 2,2'-azobis(isobutyronitrile) and 2,2'-azobis(2,4-dimethylvaleronitrile).

The polymer-encapsulated pigment (or non-monomer solid) dispersions of the invention are stable and there is no separation when centrifuged. During the preparation of the

polymer-encapsulated pigments (or non-monomer solids) of the invention, high speed agitation (for example, a circulation number per minute of the dispersion of 3 or more) has the disadvantage of causing foaming. The invention provides water-based dispersion coatings obtained from nonionic systems.

Except as qualified above, water-soluble monomers such as acrylic acid and methacrylic acid are not operable as the nonionic monomer within the scope of the invention process.

Reagents

The following is information on some of the reagents used in the following examples.

(1) PMA-30 is a 30 percent solution of phenyl mercuric acetate.

(2) Atomite is a $CaCO_3$ pigment made by Thomson, Weinman & Co.

(3) ASP-170 is a China clay pigment made by Engelhardt.

(4) Zopaque RCL-9 is a $TiO_2$ pigment made by Glidden Pigments Division.

(5) CELLOSIZE® is hydroxyethylcellulose made by Union Carbide Corporation.

(6) Igepal CO-990 is made by GAF.

(7) TiPure R-931 is a $TiO_2$ pigment made by E.I. duPont de Nemours & Co.

(8) UCAR® Latex 351 is made by Union Carbide Corporation and is a vinyl acetate/n-butyl acrylate resin having 65 percent solids and a nonionic stabilizer system.

(9) Rhoplex AC-388 is an acrylic latex (used in paints) made by Rohm and Haas.

(10) Nytal 300 is a talc pigment made by Vanderbilt.

(11) Tamol 731 is a dispersant made by Rohm and Haas.

(12) Titanox 2020 is a $TiO_2$ pigment made by NL Chemicals.

(13) L-475 Antifoam is a silicone.

(14) UCAR® Latex 367 is a polymer of 78 percent vinyl acetate and 22 percent n-butyl acrylate.

(15) Texanol is a coalescing aid made by Eastman.

(16) R-900 $TiO_2$ is made by E.I. duPont de Nemours & Co.

(17) OP-4400H is CELLOSIZE ® hydroxyethylcellulose made by Union Carbide Corporation.

(18) Gold Bond R is a silica.

(19) Celite 281 is a silica filler made by John-Manville.

(20) Colloids 581-13 is a surfactant.

(21) Tronox CR-822 is a $TiO_2$ pigment made by Kerr-McGee.

(22) Natrosol is a hydroxyethyl cellulose made by Hercules.

(23) I-1212 is a 55 percent PVC interior paint formulation published by Union Carbide Corporation.

Definition: PVC = pigment volume concentration =

$$\frac{\text{vol. of pigment}}{\text{vol. of pigment and vol. of binder}}$$

(24) Nalco is an antifoam agent.

(25) Satintone No. 5 is a clay.

(26) Dowicil 75 is a formaldehyde release agent used as a biostatic agent.

(27) T-DET-N-507 is a 100-mole ethoxylate of nonyl phenol made by Thompson-Hayward.

The following examples are illustrative of the invention. As used herein, all parts, percentages, ratios and proportions are on a weight basis unless otherwise stated herein or obvious herefrom to one ordinarily skilled in the art.

## EXAMPLE 1

A finely-divided precipitated $CaCO_3$ was encapsulated with a copolymer of vinyl acetate and n-butyl acrylate (80/20), which was similar to a typical commercial or trade sales latex copolymer. The pigment to resin ratio was 25 to 75. A nonionic surfactant and a nonionic initiator and nonionic catalyst (redox system) was used. A shadowed photomicrograph was made and the presence of $CaCO_3$ in the particles was confirmed by EDAX definition.

## EXAMPLE 2

A physical blend of particles of a latex (Rhoplex AC-388) and a talc (Nytal 300) at a 4 to 1 ratio of polymer to pigment was prepared. Shadowed photomicrographs of the blend shows the dominance of latex particles. This is a prior art example.

## EXAMPLE 3

A physical blend of particles of Rhoplex AC-388 and a talc (Nytal 300) at a 1 to 4 ratio of polymer to pigment was prepared. Shadowed photomicrographs of the blend shows the dominance of pigment particles. This is a prior art example.

## EXAMPLE 4

Finely-divided talc particles (Nytal 300) were

encapsulated with poly(vinyl acetate) at a 4 to 1 ratio of polymer to pigment. A nonionic surfactant and a nonionic initiator and nonionic catalyst (redox system) was used. Examination of SEM photomicrographs did not reveal the presence of any spherical latex particles. The shape of the talc particles is such that latex particles would have easily been seen.

EXAMPLE 5

SEM photographs and EDAX traces of a production sample, conventional, commercial semi-gloss [26 percent pigment volume concentration (PVC)] were made. SEM is scanning electron microscope and EDAX is analysis of the fluorescence pattern in conjunction with the SEM. The 26-PVC paint was prepared as follows: 34.6 pounds [15,57 kg] of propylene glycol and 2 gallons [7,57 l] of water were mixed. 3 pounds [1,35 kg] of L-475 Antifoam, 15 pounds [6,75 kg] of Tamol 731, 2 pounds [0,9 kg] of Triton GR-7, 4 pounds [1,8 kg] of Igepal CO-880, 240 pounds [108 kg] of R-900 $TiO_2$, and 0.15 pounds [67,5 g] of PMA-30 were added sequentially. The admixture was ground for 20 minutes at high speed. 2 gallons [7,57 l] of water was used as a rinse. 40.5 gallons [153,5 l] of water, 3 pounds [1,35 kg] of L-475 Antifoam, 4 pounds [1,8 kg] of OP-4400H and 1 pound [0,45 kg] of 29 percent of ammonia solution were premixed by addition in a sequential order. The premix was dissolved and added to the main admixture with agitation. 290.4 pounds [130,68 kg] of Rhoplex AC-388 and 81.27 pounds [36,57 kg] of Ucar® Latex 367 were added sequentially with agitation. The mixture was mixed for 30 minutes after all of the ingredients had been added (excessive mixing time would cause foaming). A SEM photograph and a EDAX trace were made of a polymer-encapsulated pigment, based on Titanox 2010 (NL Industries, Titanium Pigments Division, titanium dioxide)

which was encapsulated with an 84 percent vinyl acetate/16 percent butyl acrylate polymer at $TiO_2$/polymer (resin) ratio (26 percent PVC) which was equivalent to the above 26-PVC paint. In both paints the particle size of the $TiO_2$ (0.2 µm) is quite similar to the latex size (~0.5 µm) so that the comparison is more difficult to make than in the above examples. Nonetheless, in the conventional paint (26-PVC paint) the latex/pigment mixture can clearly be seen while in the paint containing the polymer-encapsulated pigments only one type of encapsulated particle is apparent.

## EXAMPLE 6

$TiO_2$ (Titanox 2020) was dispersed with the typical small amount of dispersant (Tamol 731) used in conventional paint technology, an aqueous dispersion resulting. This was a control. A laboratory-prepared paint based on the following formulation (25 PVC) was prepared.

TABLE I

PERCENT PVC LADDER

TRONOX CR-822/"UCAR" LATEX 366

| Grind | Parts by Weight |
|---|---|
| Water | 180.0 |
| QP-4400 | 4.0 |
| Tamol 731 | 12.0 |
| TERGITOL ® NPX | 4.0 |
| Colloids 581-B | 2.0 |
| Nuosept 95 | 1.0 |
| Titanox 2020 | 240.0 |

Let Down

| | |
|---|---|
| Propylene Glycol | 40.0 |
| Texanol | 12.0 |
| UCAR ® Latex 366 | 389.0 |
| Triton GR-7 | 1.0 |
| $H_2O$ or 3% QP-4400 to 85 KU | 139.0 |
| $NH_4OH$ | to pH 8.5 |

The resultant paint had 45 percent total solids and 25 percent PVC. This was a conventional paint. A polymer-encapsulated pigment was prepared encapsulating Titanox 2020 with poly(vinyl acetate) at an equivalent $TiO_2$/polymer ratio (25 percent PVC). SEM microphotographs were made in all three instances. By comparing the photographs of the control $TiO_2$ dispersion, conventional paint and the polymer-encapsulated pigment, the difference between the polymer-encapsulated pigments versus the $TiO_2$ pigment control and the paint mixture was quite apparent. The polymer-encapsulated pigments appear to consist of a uniform encapsulation with an absence of latex particles, which was not the case with the control and the paint mixture.

EXAMPLE 7

$TiO_2$ was encapsulated with a copolymer of vinyl acetate and butyl acrylate (84 percent - 16 percent) - the ratio of $TiO_2$ to copolymer was 50 to 50. The polymer-encapsulated $TiO_2$ was incorporated into 22 percent PVC paint so as to have 251,58 $kg/m^3$ 2.1 pounds of $TiO_2$ per gallon. SEM microphotographs were made of a cross-section of a film of the 22-PVC composition

having the polymer-encapsulated pigment and of a cross-section of a film of the commercial 26 PVC paint of Example 5. The paint had 2.4 pounds (287,52 kg/m$^3$) of $TiO_2$ per gallon. In the invention film cross-section, the film itself appeared much less porous, and the $TiO_2$ cores appeared to be much more uniformly distributed throughout the cross-section than was apparent in the conventional paint film cross-section.

EXAMPLE 8

A number of other observations provided indirect evidence that a real difference exists between conventional paint and paints containing the polymer-encapsulated pigments. When side-by-side comparisons were made of 6 mil (152 µm) wet draw downs of a polymer-encapsulated $TiO_2$ versus a conventional semi-gloss paint ($TiO_2$/latex polymer mixture) and the films were allowed to dry, a visual appearance difference existed. Although measured gloss differences were not large at equivalent pigment/polymer ratio (same PVC level) when measured by the usual 60 gloss meter, the polymer-encapsulated pigment films provided a clarity or sparkle similar to a distinctness of image (DOI) character not seen in the conventional paint films. Most such comparisons were made on Leneta charts or Leneta scrub resistance panels. When cast on a metal surface (aluminum panel), the polymer-encapsulated pigment film appeared to telegraph the metal surface through to the semi-gloss paint film. Comparative scrub resistance measurements of conventional semi-gloss paints versus polymer-encapsulated pigment films at equivalent PVC levels also showed advantages for the polymer-encapsulated pigment film as long as a reasonable attempt was made to maintain a high molecular

weight in the encapsulating polymer layer exercised using conventional latex technology principles. Apparent hiding improvements of polymer-encapsulated pigment films versus conventional paints were also observed. The magnitude of these differences were approximately those seen in competitive plastic pigment technologies, e.g., those technologies reported by Glidden and Dulux, which permit equivalent hiding at about a 30 percent reduction in $TiO_2$ level. Exceptional stability in $TiO_2$-based polymer-encapsulated pigment dispersions also existed. Attempts to centifuge 50 percent solids, 15 PVC polymer-encapsulated pigment dispersions based on $TiO_2$ (RCL-9) encapsulated with 84/16 vinyl acetate/butyl acrylate copolymer and to separate a supernatant layer failed. The stability was so high that no separation occurred under the conditions selected. Although control $TiO_2$ dispersions were not run, operation was conducted under conditions at which an easy separation would be expected. Repeated observations were made during the preparation of polymer-encapsulated pigment dispersions that indicate that an extremely high degree of dispersion was readily obtained. In fact, an optical light microscope was used to examine dilutions of reaction mixtures, and the absence of large flocculates was frequently observed. The wetting behavior on a drawdown of many of the polymer-encapsulated pigment dispersions side-by-side with conventional paints appeared to cause a separation or demixing of the films. Addition of some anionic wetting agent or intentionally mixing a polymer-encapsulated pigment dispersion with a conventional paint removed this apparent wetting incompatibility. All of these behavioral differences show that substantial and

potentially significant differences exist between the polymer-encapsulated pigment technology and conventional paint technology or prior-art technologies related to plastic pigments.

EXAMPLE 9

Zopaque RLC-9 $TiO_2$ (Glidden Pigments Division) yielded polymer-encapsulated pigment dispersions of excellent stability - a 15 PVC version was still stable after six months with no syneresis. The best success was obtained with Titanox 2010 (NL Industries, Titanium Pigments Division) which is considered to be a grade of $TiO_2$ for plastics rather than coatings applications with a content of 97 percent $TiO_2$ and a trace ( 1 percent) of alumina ($Al_2O_3$) surface treatment. Stable dispersions and good film quality resulted and were reproduced from batch-to-batch preparations of the polymer-encapsulated pigment dispersion. Titanox 2020, a coatings grade $TiO_2$, has also been used to prepare polymer-encapsulated pigment dispersions.

$TiO_2$ of the brand Tronox CR-822 (Kerr-McGee) gave stable dispersions; but SEM photographs suggested that encapsulation was not uniform, and the polymer layer appeared to be lopsidedly attached to the $TiO_2$ particles. Film quality also suffered. On the assumption that a surface treatment existed, extraction of the $TiO_2$ with water/monomer mixes, e.g., vinyl acetate, was attempted. Serious foaming with no improvement in encapsulation was observed. In addition to the well-known alumina ($Al_2O_3$) and silica ($SiO_2$) treatments which are widely applied to coatings grades of $TiO_2$, both organic surface treatments and pH adjustments with ammonia, amines, or alkali hydroxides are frequently employed and sometimes are varied

from lot to lot. Apparently adverse effects occur from organic and non-uniform inorganic surface treatment of many grades of $TiO_2$. Untreated high purity $TiO_2$ are accordingly preferred.

Polymer-encapsulated pigment dispersions were made at a level of 70 percent total solids with a 90/10 pigment/polymer ratio using Atomite ($CaCO_3$) pigment and vinyl acetate monomer. A smooth, thick but handleable dispersion resulted which showed substantial syneresis after one to two days. This dispersion was made with 2.5 part of T-Det N-1007 on solids. Improved stabilization would occur in the 4 to 10 part range of solids. Untreated Omyacarb UF $CaCO_3$ was used to prepare a 68 percent total solids polymer-encapsulated pigment dispersion at a 90/10 pigment/polymer ratio using polyvinyl acetate. After five days, no syneresis was observed. The viscosity was high but handleable, and the dispersion showed a low brushometer viscosity of 1.3 poise at high shear rate. The low shear rate viscosity or degree of thixotropy probably could be reduced by the addition of anionic surfactant.

A clay (ASP-170) plus vinyl acetate monomer was used to make a 62 percent total solids polymer-encapsulated pigment dispersion at a 9/1 pigment-to-polymer ratio. After one month, the dispersion was stable and remained handleable with a trace of syneresis. A screening experiment with a red iron oxide yielded a fluid dispersion in which the red color was extremely bright. A successful screening test was made with a zinc oxide, a reactive pigment.

Ti-Pure R-900 (duPont, $TiO_2$) did not disperse readily in the initial reaction mixture. Once the initiation of the reaction began, the R-900 appeared to deflocculate and

smooth, stable dispersion results. Film drawdowns gave variable appearance (gloss) after drying, and considerable variation batch-to-batch and from one lot of pigment to another was seen. Ti-Pure R-960 (duPont) dispersed readily in the initial reaction mixture containing vinyl acetate monomer. The polymer-encapsulated pigment dispersion did not have outstanding stability and showed syneresis (water layer formation) after about one month. Only one run was made with R-960. Ti-Pure R-932 dispersed poorly under all conditions, and a high-quality polymer-encapsulated pigment dispersion was not made. R-931 is a flocculated $TiO_2$ pigment grade, so poor dispersion was expected.

A 70 percent total solids polymer-encapsulated pigment dispersion was made with Beaverwhite 325 (talc) and vinyl acetate monomer at a pigment/polymer ratio of 9/1. Substantial syneresis occurred in one to two days. An attempt was made to prepare a 56 percent total solids polymer-encapsulated pigment dispersion of 44 µm 325 mesh wet ground mica; again, substantial syneresis occurred in one or two days.

EXAMPLE 10

Hiding comparisons were also made on Leneta 38 opacity charts and visually compared. At equivalent content of $TiO_2$ 287,52 kg/m³ (2.4 lbs. per gal.), the polymer-encapsulated pigment dispersion clearly gave better hiding power than did the commercial paint formulation even when compared against toned production sample. Numerous visual comparisons versus conventional technology were made over a wide pigment/polymer ratio with polymer-encapsulated pigments based on Titanox 2010. While in conventional paint technology the maximum

359,4 - 395,34 kg/m³
attainable hide is normally achieved at 3.0 to 3.3 lbs./gal. of $TiO_2$ in semi-gloss paints, extrapolation of the visual comparisons indicated that polymer-encapsulated pigment dispersions could achieve equivalent hide somewhere in the range of 2.4 to 2.9 lbs./gal. (287,52 - 347,42 kg/m³) as Titanox 2010. A uniform polymer layer such as that achieved with Titanox 2010 is required. Further, from an understanding of alternative technologies for increasing hiding power, e.g., the use of fine particle pigment extenders such as Omyacarb UF, or polystyrene plastic pigments as practiced by Glidden, or the styrene polyester encapsulated $TiO_2$ (Spindrift) of Dulux, it is estimated that the improvement of hiding achievable with polymer-encapsulated pigment dispersions is at least equivalent to the 30 percent reduction in $TiO_2$ content claimed and apparently achieved by these alternative technologies.

EXAMPLE 11

Comparisons of the scrub resistance of polymer-encapsulated pigment dispersions paints versus commercial paint from Example 5 are shown in Table II. At equivalent binder content, the polymer-encapsulated pigment dispersions showed about a 4-fold increase in side-by-side comparisons. On long-term drying (2 weeks) of the paints, the differential increased to about a 5-times advantage for the polymer-encapsulated pigment dispersions. Care should be taken in the preparation of polymer-encapsulated pigment dispersions to use those techniques which maximize molecular weight in typical latexes, e.g., low catalyst, low temperature, high monomer concentrations, so that scrub resistance is maximized. Comparative wet adhesion tests on

glossy alkyd (aged Glidden Shamrock Green) were also run on the same samples, but no significant degree of wet adhesion was shown by either the PEP dispersion (22 PVC) or the commercial production paint from Example 5.

TABLE II

SCRUB RESISTANCE COMPARISONS

CONTROL = PRODUCTION SAMPLE OF COMMERCIAL FORMULATION NUMBER 5851 (26 PVC)

PEP = TITANOX 2010 ENCAPSULATED WITH MONOMER MIX OF 84% VINYL ACETATE/16% BUTYL ACRYLATE

| | 0,152 mm Gardner Scrub Cycles (6 mil wet film, 2-day dry) Initial Wear | 10% Wear |
|---|---|---|
| (A) PEP at 3/1 Pigment/Polymer ratio | | |
| 46 percent PVC | 250 | 280 |
| Control | 270 | 300 |
| (B) PEP at 1/1 Pigment/Polymer ratio | | |
| 22 percent PVC | 1095 | 1147 |
| Control | 260 | 320 |
| (C) 2nd Batch of PEP at 1:1 Pigment/Polymer ratio | | |
| 22 percent PVC | 1095 | 1177 |
| Control | 230 | 245 |
| (D) PEP at 1/3 Pigment/Polymer ratio | | |
| 7 percent PVC | 1165 | 1215 |
| Control | 245 | 280 |

Notes:

PEP=polymer-encapsulated pigment

Gardner Scrub Cycles = standard that is conducted on apparatus sold by Gardner.

EXAMPLE 12

On short-term dry, the block resistance of polymer-encapsulated pigment dispersions as semi-gloss paints was inferior to conventional paint technology. The rate of water release appeared to be hindered by the polymer-encapsulated pigment structure of a layer of polymer encapsulating a pigment particle. Yet, for a 9 PVC film of a polymer-encapsulated pigment dispersion based on a 1/4 Zopaque RCL-9 $TiO_2$ pigment/84% vinyl acetate-16% butyl acrylated polymer, after a 6-months drying, the block resistance of such a 6-mil wet film as excellent. In a brush lapping test, there was a 20 minute lap time, 8 hour tack time and 24 hour dry-to-touch time when equilibrated. In one experiment, $TiO_2$ was encapsulated with a 60% butyl acrylate core/40% styrene shell in stages at a 1/4 pigment-to-polymer ratio. Films of the polymer-encapsulated pigment dispersion on air drying fell apart after a 500-gram weight pressed them face to face overnight.

The same slow water release was visually observed to provide improved open time to polymer-encapsulated pigment dispersions compared to conventional semi-gloss paints even without the incorporation of the traditional propylene glycol additive. This improvement is 4 to 5 times (based on limited observations).

EXAMPLE 13

This example demonstrates the polymeric microencapsulation of pigments using standard emulsion polymerization techniques. The paint used was a 76.2 percent PVC paint similar to the commercial paint used in Example 5.

Paint A was prepared by admixing, in a reactor, 430 gm of water, 57 gm of Igepal CO-997, 89 gm of vinyl acetate and 25 g of n-butyl acrylate. The reactor charge was admixed at 200 rpm for 15 minutes at room temperature. 210 gm of TiPure R-902 was added, and the admixture was mixed at 300 rpm for 15 minutes at room temperature. 96 gm of Celite 281 was added, and the admixture was mixed at 400 rpm for 15 minutes. 388 gm of Gold Bond R and 260 gm of $H_2O$ were added, and the admixture was mixed at 460 rpm for 15 minutes at room temperature. 292 gm of ASP-170 and 260 gm of water were added, and the admixture was mixed at 500 rpm for 15 minutes at room temperature. 1.3 gm of t-butyl hydroperoxide and 5 gm of water were added at room temperature, and the admixture was mixed after its temperature was raised to 50°C. A premix of 1.3 gm of sodium formaldehyde sulfoxylate and 8.0 gm of water was added. The reaction was allowed to occur for 1 hour at 68 C. and then 2 gm of Colloid 581-B was added. The admixture was cooled to room temperature and transferred.

The polymer-encapsulated pigments had a weight of solids of 53.1 percent, a Stormer viscosity of 93 KU, a Brookfield viscosity (0.3 rpm) of 6400 mPa.s cps, and an ICI high shear viscosity of 50 mPa.s 0.5 poise. The pH was 7.5. The contrast ratio (dry) was 0.99. The contrast ratio (wet) in the paint was 0.985, and the paint film appearance (152 μm 6 mil gap, 3B chart) was smooth and non-grainy.

Paint B was prepared by admixing, in a reactor, 430 gm of water, 15.2 gm of Igepal CO-997, 89 gm of vinyl acetate, 25 g of n-butyl acrylate and 25 gm of V-Pyrol. The reactor charge was admixed at 200 rpm for 15 minutes at room temperature. 210 gm of TiPure R-902 was added, and the admixture was mixed at 300 rpm for 15 minutes at room

teperature. 96 gm of Celite 281 was added, and the admixture was mixed at 400 rpm for 15 minutes. 388 gm of Bold Bond R and 260 gm of $H_2O$ were added, and the admixture was mixed at 460 rpm for 15 minutes at room temperature. 292 gm of ASP-170 and 300 gm of water were added, and the admixture was mixed at 500 rpm for 15 minutes at room temperature. 1.3 gm of t-butyl hydroperoxide and 5 gm of water were added at room temperature, and the admixture was mixed after its temperature was raised to 50°C. A premix of 1.3 gm of sodium formaldehyde sulfoxylate and 8.0 gm of water was added. The reaction was allowed to occur for 1 hour at 68° C. The admixture was then cooled to room temperature and transferred.

The polymer-encapsulated pigments had a weight of solids of 52.1 percent, a Stormer viscosity of 100 KU, a Brookfield viscosity (0.3 rpm) of 5600 mPa.s cps, and an ICI high shear viscosity of 50 mPa.s 0.5 poise. The pH was 7.9. The contrast ratio (dry) was 0.99. The contrast ratio (wet) in the paint was 0.99, and the paint film appearance (152 µm 6 mil gap, 3B chart) was smooth and non-grainy.

EXAMPLE 14

Using the general procedure outlined in Example 13, the pigment system used in Union Carbide's published formulation I-1212 was encapsulated (once at a PVC of 45 and once at a PVC of 60) using a 78/22 vinyl acetate/n-butyl acrylate ratio. Portions of these two polymer-encapsulated pigments were then blended to give 50 PVC and 55 PVC systems. As controls, paints were made by conventional means at 45 PVC and 60 PVC and portions thereof blended to provide 50 PVC and 55 PVC paints. The results of the evaluations of these systems are shown in Tables III and IV.

TABLE III

| PVC, % | TEST | Conventional | PEP |
|---|---|---|---|
| 45 | Contrast Ratio | 0.974 | 0.977 |
| 50 | | 0.977 | 0.985 |
| 55 | | 0.980 | 0.991 |
| 60 | | 0.991 | 0.996 |
| 45 | Resistance to | 0.922 | 0.613 |
| 50 | Nigrosine | 0.0947 | 0.567 |
| 55 | Stain | 0.877 | 0.576 |
| 60 | | 0.761 | 0.502 |
| 45 | Resistance to | 0.993 | 0.985 |
| 50 | Gilsonite | 0.992 | 0.748 |
| 55 | Stain | 0.041 | 0.643 |
| 60 | | 0.844 | 0.675 |
| 45 | ASTM Scrub | 505 | 19 |
| 50 | Resistance | 202 | 43 |
| 55 | (cycles) | 248 | 39 |
| 60 | | 72 | 14 |

Notes: Gilsonite is a test where stain is placed on the top of the paint, the stain is rinsed off and the extent to which the paint was stained is measured by measuring contrast ratio.

PEP is polymer-encapsulated pigment.

TABLE IV

| PVC, % | TEST | CONVENTIONAL | PEP |
|---|---|---|---|
| 45 | pH | 8.3 | 8.2 |
| | % TS | 53.0 | 63.0 |
| | KU | 88 | 82 |
| | ICI, poise 0,1 Pa.s | 0.79 | 0.91 |
| | Brookfield (0.3rpm), cp mPa.s | 88,000 | 130,000 |
| 50 | pH | 8.1 | 8.2 |
| | %TS | 48.0 | 48.0 |
| | KU | 80 | 72 |
| | ICI, poise 0,1 Pa.s | 0.68 | 0.80 |
| | Brookfield (0.3rpm), cp mPa.s | 68,800 | 67,200 |
| 55 | pH | 8.1 | 8.1 |
| | %TS | 48.0 | 48.0 |
| | KU | 77 | 70 |
| | ICI, poise 0,1 Pa.s | 0.60 | 0.81 |
| | Brookfield (0.3rpm), cp mPa.s | 43,600 | 54,400 |
| 60 | pH | 8.2 | 8.3 |
| | %TS | 53.0 | 53.0 |
| | KU | 86 | 82 |
| | ICI, poise 0,1 Pa.s | 0.79 | 0.81 |
| | Brookfield (0.3rpm), cp mPa.s | 72,400 | 131,200 |

Notes: %TS is percent of total solids (solids by weight).

KU is Stormer Viscosity in Krebs Units.

These results suggest that the desired encapsulation was indeed obtained. The encapsulated systems appear to be more difficult to film (coalesce) but have higher high-shear (I.C.I.) viscosity, therefore they would be expected to give higher film build.

A series of tests were run with a paint having various pigment volume concentrations with a polymer-encapsulated $TiO_2$ pigment (Tronox CR-822). In this series the encapsulating polymer was 10 percent n-butyl acrylate and 90 percent vinyl acetate. The results are:

TABLE V

| PVC, % | TEST | CONVENTIONAL | PEP |
|---|---|---|---|
| 15 | Contrast Ratio | 0.981 | 0.983 |
| 25 | | 0.981 | 0.990 |
| 15 | 60 Gloss | 67% | 49% |
| 25 | | 19% | 31% |
| 15 | 20 Gloss | 26% | 17% |
| 25 | | 2% | 5% |
| 15 | ASTM Scrub | 1580% | 644% |
| 25 | (Res. cycles) | 53% | 279% |
| 15 | pH | 7.3 | 7.0 |
| | %TS | 48.0 | 48.0 |
| | KU | 82 | 78 |
| | ICI, poise 0,1 Pa.s | 1.00 | 0.89 |
| | Brookfield (0.3rpm), cp mPa.s | 86,000 | 25,000 |
| 25 | pH | 6.2 | 6.3 |
| | %TS | 48.0 | 48.0 |
| | KU | 86 | 77 |
| | ICI, poise 0,1 Pa.s | 0.95 | 0.90 |
| | Brookfield (0.3rpm), cp mPa.s | 72,000 | 14,000 |

EXAMPLE 15

This example demonstrates an emulsion polymerization technique and latex which can be used to encapsulate pigments.

A latex was prepared by admixing, in a reactor, 485 gm of water 12 gm of Igepal CO-997, 2.5 gm of sodium acetate, 45 gm of Igepal CO-977, 5 g of Nalco 71-D5 antifoam and 70 gm of a monomer mixture (of 903 gm of vinyl acetate and 253 gm of n-butyl acrylate). The initial reactor charge was added at room temperature and admixed. The reactor was a 3-liter jacketed resin flask, with the steam/water controlled by instrumentation for heating and cooling, and using an electric stirrer motor with a stainless steel shaft, one blade and digetal readout of the rpms. An initial charge of 1.3 gm of t-butyl hydroperoxide was added to the reactor at 35°C. Then a solution of 1.3 gm of sodium formaldehyde sulfoxylate and 8 gm of water was slowly added to the reactor at 35°C. The temperature was raised to 70°C and maintained there. The rest of the monomer mixture was fed in over a four hour period. A solution of 3.6 gm of t-butyl hydroperoxide and 34 gm of water and a solution of 2.4 gm of sodium formaldehyde sulfoxylate and 34 gm of water were separately fed into the reactor over a 4 1/2 hour period. The monomer mixture and catalyst solutions were concurrently fed into the reactor starting at the same time. The agitation, once the 70°C. level was reached, was about 200 rpm, was just below 300 rpm when the monomer and catalyst additions started, and rose to about 1000 rpm at the end of the addition. The reaction mixture was post heated for 30 minutes after the feeding in of the catalyst. The reaction mixture was cooled and removed from the reactor. The

resultant latex had a total solids of 66.15 percent, a
0,325 Pa.s
brushometer viscosity of 3.25 poise and a Brookfield
mPa.s
viscosity of 5,350 cps (LVT Mode V, 60 rpm).

EXAMPLE 16

This example demonstrates an emulsion polymerization technique and latex which can be used to encapsulate pigments.

A latex was prepared by admixing, in a reactor, 388 gm of water 9.6 gm of Igepal CO-997, 2.0 gm of sodium acetate, 36 gm of Igepal CO-997, 4.0 gm of Nalco 71-D5 antifoam and 56 gm of a monomer mixture (of 722.4 gm of vinyl acetate and 204.4 gm of n-butyl acrylate). The initial reactor charge was added at room temperature and admixed. The reactor was a 3-liter jacketed resin flask, with the steam/water controlled by instrumentation for heating and cooling, and using an electric stirrer motor with a stainless steel shaft, one blade and digital readout of the rpms. An initial charge of 1.04 gm of t-butyl hydroperoxide was added to the reactor at 35°C. Then the solution of 1.04 gm of sodium formaldehyde sulfoxylate and 6.4 gm of water was slowly added to the reactor at 35°C. The temperature was raised to 70°C. and maintained there. The rest of the monomer mixture was fed in over a four hour period. A solution of 2.88 gm of t-butyl hydroperoxide and 27.2 gm of water and a solution of 1.92 gm of sodium formaldehyde sulfoxylate and 27.2 gm of water were separately fed into the reactor over a 4 1/2 hour period. The monomer mixture and catalyst solutions were concurrently fed into the reactor starting at the same time. The agitation, once the 70°C. level was reached, was about 175 rpm, was about 200 to 240 when the monomer and catalyst

additions started, and rose to about 750 rpm at the end of the additions (and during cooling). Latex TPX-6108 BA4222, in an amount of 350 ml, was fed in over the same time period as the monomer addition. (The reason was to study the effect of adding latex to the reaction mixture and the effect on viscosity.) The reaction mixture was post heated for 30 minutes after the feeding in of the catalyst. The reaction mixture was cooled and removed from the reactor. The resultant latex had a total solids of 65.33 percent, a
0,219 Pa.s
brushometer viscosity of 2.19 poise and a Brookfield
mPa.s
viscosity of 8,300 cps (LVT Mode V, 60 rpm).

EXAMPLE 17

This example demonstrates the polymeric microencapsulation of pigments using standard emulsion polymerization techniques.

A reactor was purged with nitrogen. 485 gm of water were added to the reactor. 264 gm of pigments (26 gm of Ti Pure R-900 and 238 of Santintone #5) were added to the reactor and the admixture was agitated at a moderate level (about 200 rpm). 87 gm of V-Pyrol was added while the admixture was agitated at a high level (250 to 270 rpm) for about 5 minutes. 51 gm of T-DET-N-507 was added while the admixture was agitated at 270 rpm for 5 minutes. Then 1 gm of Nalco 71-D5 antifoam was added. The initial reactor charge was added at room temperature and admixed. The reactor was a 3-liter jacketed resin flask, with the steam/water controlled by instrumentation for heating and cooling, and using an electric stirrer motor with a stainless steel shaft, two blades and digetal readout of the rpms. An initial charge of 1.3 gm of t-butyl hydroperoxide (70 percent

aqueous) and 5.0 of distilled water were added to the reactor at 35°C. and mixed for 5 minutes at 270 rpm. Then a reducer solution of 1.3 gm of sodium formaldehyde sulfoxylate and 8 gm of water was added to the reactor at 50°C. When the reactor isotherm reached 60° to 65°C., monomer and catalyst/reducing feeds were begun. A monomer mixture of 550 gm of vinyl acetate, 155 gm of n-butyl acrylate and 7 gm of Nalco 71-D5 was linearly fed in over a four hour period. A catalyst solution of 3.63 gm of t-butyl hydroperoxide (TBHP) and 34 gm of water and a reducing solution of 24 gm of sodium formaldehyde sulfoxylate (SFS) and 34 gm of water were linearly separately fed into the reactor over a 4 hour period. The monomer mixture and catalyst/reducer solutions were concurrently fed into the reactor starting at the same time. The temperature was maintained at 60° to 65°C. during the reaction and the agitation level (speed) was increased as necessary to maintain a vortex or good mixing. The reaction mixture was post heated at 70° to 75°C. for 30 minutes using minimal agitation after the feeding in of the catalyst. 0.75 gm of Dowicil 75 and 3.0 gm of distilled water were added to the reaction mixture. The reaction mixture was cooled and removed from the reactor to provide a latex (polymer-encapsulated pigment dispersion).

The following is a summary of the tert.-butylhydroperoxide and sodium formaldehyde sulfoxide used in Example 17:

| | TBHP | SFS |
|---|---|---|
| Added to reactor | 1.3g | 1.3g |
| Fed during run | 3.63g | 2.3g |
| Total amounts used | 4.93g | 3.6g |

There were 38 ml of 9.57% TBHP in water fed. There were 35

ml of 6.59% SFS in water fed.

EXAMPLE 18

Examples 17 was repeated except that no baffles were used in the reactor. A polymer-encapsulated pigment dispersion having a total solids content of 66.4 percent is obtained.

WHAT IS CLAIMED IS:

1. A process of preparing a uniformly polymer-encapsulated dispersed solid composition comprising:

(a) admixing water, a non-monomer solid in particulate form, a nonionic protective colloid or stabilizing agent, and all or a portion of a nonionic monomer having at least one monovalent unsaturated organo moiety, said non-monomer solids having a minimum of surface charge;

(b) adding a nonionic polymerization initiator to admixture (a) and heating admixture (a) to begin the polymerization of said nonionic monomer; and

(c) adding a nonionic catalyst and any remainder of said nonionic monomer to admixture (b), allowing the polymerization to proceed to finality or the desired degree, whereby a polymer-encapsulated solid dispersion is obtained.

2. Process as claimed in Claim 1 wherein the remainder of said nonionic monomer is added over a period of time, said nonionic stabilizing agent is a nonionic surfactant, and said non-monomer solid is a pigment.

3. Process as claimed in Claim 2 wherein there is 0.5 to 10 parts by weight of nonionic surfactant based on the total solids, namely, monomer and non-monomer solid.

4. Process as claimed in Claim 1 to 3 wherein said initiator is a free radical initiator and is present in an amount of 0.05 to 1 percent by weight, based on the total weight of the monomer and the pigment.

5. Process as claimed in Claim 4 wherein said free radical initiator is a peroxide or a redox system.

6. Process as claimed in Claim 1 to 5 wherein heat is applied to help initiate and carry out the polymerization.

7. Process as claimed in Claim 1 to 6 wherein the polymerization is conducted at a temperature between 25° to 300° C.

8. Process as claimed in Claim 1 to 7 wherein the ratio of non-monomer solid to monomer is between 9 to 1 and 1 to 9.

9. Process as claimed in Claim 1 to 8 wherein the ratio of water to total solids is between 4 to 6 and 7 to 3, the total solids being the monomer and the non-monomer solid.

10. Process as claimed in Claim 1 to 9 wherein the nonionic stabilizing agent is a dispersion moiety which readily copolymerizes with said nonionic monomer having at least one monovalent unsaturated organo moiety.

11. Process as claimed in Claim 10 wherein the dispersing monomer is N-vinyl pyrrolidone or a polymer of N-vinyl pyrrolidone.

12. Process as claimed in Claim 1 to 9 wherein the nonionic stabilizing agent is a nonionic surfactant which has a hydrophilic portion which is attracted to the non-monomer solid surface.

13. Process as claimed in Claim 1 to 12 wherein said nonionic monomer is a monomer containing at least one reactive vinyl group $R_7R_8C=CR_9-$, reactive vinylidene group $R_7R_8C=C$ and/or reactive vinylene group $-CR_{10}=CR_{11}-$, wherein $R_7$, $R_8$, $R_9$, $R_{10}$ and $R_{11}$ each is (a) hydrogen, (b) alkyl having 1 to 4 carbon atoms, (c) alkoxy having 1 to 4 carbon atoms, (d) alkylcarboxy having 2 to 12 carbon atoms, (e) aryl having 6 to 10 carbon atoms, (f) alkoxycarbonyl having 2 to 12 carbon atoms, (g) substituted aryl having 6 carbon atoms and being substituted with at least one halogen nitrile, alkyl having 1 to 4 carbon atoms, and/or alkoxy having 1 to 4 carbon atoms, (h) aralkyl wherein the alkyl has 1 to 4 carbon atoms and the aryl has 6 to 10 carbon atoms, (i) substituted aralkyl wherein the alkyl has 1 to 4 carbon atoms, the aryl has 6 to 10 carbon atoms and the substituents are halogen, alkyl having 1 to 4 carbon atoms, nitrile and/or alkoxy having 1 to 4 carbon atoms, (j) substituted alkyl having 1 to 4 carbon atoms and being substituted with nitrile, halogen and/or alkoxy having 1 to 4 carbon atoms, (k) substituted alkylcarboxy having 2 to 12 carbon atoms and substituted with halogen and/or nitrile, or (l) substituted alkoxycarbonyl having 2 to 12 carbon atoms and substituted with halogen and/or nitrile, with the proviso that no allyl compound or 1-olefin, except ethylene or substituted 1-olefin, comes within the scope of the above formulae.

14. Process as claimed in Claim 13 wherein said nonionic monomer has one or multiple reactive unsaturated group(s).

15. Process as claimed in Claim 1 to 14 wherein said pigment is an organic solid, preferably an inorganic solid.

16. Process as claimed in Claim 1 to 15 wherein the admixture of step (a) is conducted in two steps comprising first admixing the water, a non-monomer solid in particulate form and a nonionic protective colloid or stabilizing agent and then admixing all or a portion of the nonionic monomer with the first admixture.

17. A solids composition as prepared by the process claimed in Claim 1 to 16.

18. A solids composition comprising non-monomer insoluble solid particles uniformly coated and encapsulated with at least one monovalent unsaturated organo moiety, said solids composition being in effect a solids dispersion.

19. The solids composition as claimed in Claim 18 wherein the solid is an organic solid, preferably an inorganic solid.

20. The solids composition as claimed in Claim 18 wherein a nonionic stabilizing agent or its residue - preferably a nonionic surfactant, said nonionic surfactant being one which has a hydrophilic portion which is attracted to the surface of the non-monomer pigment - is present in said encapsulating polymer and/or on the surface of said non-monomer solid.

21. A coating composition comprising conventional coating ingredients and a solids composition, said pigment composition being that claimed in Claim 18.